# EUROPÄISCHE PATENTSCHRIFT

(11) **EP 3 063 342 B1**
(45) Veröffentlichungstag und Bekanntmachung des Hinweises auf die Patenterteilung: **12.07.2017**
(21) Anmeldenummer: 14789832.4
(22) Anmeldetag: 27.10.2014
(51) Int. Cl.: E04B 1/86

(54) **BETONELEMENT UMFASSEND EINEN SCHALLABSORBER**
CONCRETE ELEMENT CONTAINING AN ACOUSTIC ABSORBER
ÉLÉMENT DE BÉTON COMPRENANT UN ABSORBEUR ACOUSTIQUE

(30) Priorität: 31.10.2013 EP 13191001
(43) Veröffentlichungstag der Anmeldung: 07.09.2016
(73) Patentinhaber: Construction Research & Technology GmbH, 83308 Trostberg (DE)
(72) Erfinder: MÖNNIG, Sven, 71686 Remseck (DE); TURCINSKAS, Sarunas, 83308 Trostberg (DE)
(74) Vertreter: BASF IP Association
(86) Internationale Anmeldenummer: PCT/EP2014/072987
(87) Internationale Veröffentlichungsnummer: WO 2015/063022

(56) Entgegenhaltungen:
- EP-A2- 2 559 532
- DE-U1-202009 001 754

## Beschreibung

Die vorliegende Erfindung betrifft ein bewehrtes Betonelement umfassend einen auf einer Oberfläche des Betonelements teilweise freiliegenden Schall absorbierenden, zumindest teilweise offenzelligen geschäumten Werkstoff, wobei die Bewehrung teilweise von dem geschäumten Werkstoff umschlossen ist. Weiterhin wird ein Verfahren zur Herstellung eines solchen Betonelements sowie dessen Verwendung als Akustikdecke in einem Gebäude offenbart.

Die akustischen Verhältnisse in Räumen hängen stark von den architektonischen Gegebenheiten ab. Dabei lassen sich die Größen, die den akustischen Eindruck eines Raumes bestimmen, durch entsprechende Raumgestaltung mehr oder weniger stark beeinflussen. Neben der reinen Lärmreduzierung ist die Anpassung der akustischen Eigenschaften eines Raumes an seinen Bestimmungszweck ein wesentliches Ziel der Raumakustik. Im Gegensatz zur Außenwelt sind die Schallfelder in Räumen diffus, da sie sich aus direktem und reflektiertem Schall generieren. Ihre Regelung kann durch entsprechende Reduzierung der Schallleistung erfolgen. Hierbei kommen technische Schallabsorber zum Einsatz, welche gezielte Absorptions- und Reflexionsvorgänge ermöglichen.

Grundsätzlich lassen sich technische Absorber, abhängig von ihrer Arbeitsweise in zwei Gruppen, nämlich in Resonatoren und poröse Absorber einteilen.

Bei der Wirkungsweise von Resonatoren handelt es sich ganz allgemein um akustische Feder-Masse-Systeme, welche ein ausgeprägtes Schallabsorptionsmaximum besitzen. Beispiele für solche Schallabsorber sind Platten-Resonatoren, Helmholtz-Resonatoren oder mikroperforierte Absorber.

Im Gegensatz dazu erfolgt die Absorption der Schallenergie an porösen Absorbern in erster Linie durch Reibung an den Porenwänden, wo sie in Wärmeenergie umgewandelt wird. Hierfür ist eine offenporige Struktur mit ausreichender Porosität erforderlich. Aufgrund der primär durch Dissipation erzeugten Schallabsorption besitzen poröse Schallabsorber im Vergleich zu Resonatoren ein signifikant anderes Schallabsorptionsspektrum. Dabei steigt der frequenzabhängige Schallabsorptionsgrad im Idealfall stetig zu höheren Frequenzen s-förmig an und nähert sich asymptotisch einem Maximalwert. Poröse Absorber können unterschiedlich aufgebaut sein. Dabei sind die Materialvarianten sehr vielfältig.

Schaumprodukte sind im Allgemeinen Zweiphasensysteme, wobei eine Phase gasförmig und die andere fest oder flüssige ist. Dabei besteht die gasförmige Phase aus feinen Gasblasen, die entweder eine kugelförmige oder tetraedrische Form besitzt und durch feste oder flüssige Zellstege begrenzt wird. Sie lassen sich deshalb in zwei große Gruppen, die Kugelschäume und die Tetraederschäume einteilen. Die Zellstege sind über Knotenpunkte miteinander verbunden und bilden dabei ein Gerüst.

Schäume mit schallabsorbierenden Eigenschaften sind zumeist offenzellig. Hier sind die dünnen Wände zwischen den Begrenzungsstegen zerstört und die Zellen miteinander verbunden. Dadurch wirkt das Material als poröser Absorber. Die stoffliche Charakteristik der Zellstege in offenzelligen Schäumen ist sehr vielfältig. Sie reicht von Metallen über anorganische Materialien bis hin zu Organopolymeren, die im technischen Einsatz heutzutage den weitaus größten Anteil einnehmen und allgemein als Schaumstoffe bezeichnet werden. Organopolymerschäume werden, abhängig von ihrer Härte in Weich- und Hartschäume eingeteilt. Bei diesen erfolgt die Blasenbildung zumeist über ein Treibgas, welches in situ durch eine chemische Reaktion entsteht oder durch eine chemische Verbindung, die in der organischen Matrix gelöst ist und bei niedrigen Temperaturen siedet oder in gasförmige Produkte zerfällt. Daneben lassen sich Schäume auch durch mechanisches Einmischen von Gasen, durch Polymerisation in Lösung unter Phasentrennung oder durch den Einsatz von Füllstoffen, die nach der Härtung herausgelöst werden, erzeugen.

Offenzellige PUR-Schäume sind in der Literatur vielfach beschrieben. Sie werden üblicherweise aus isocayanathaltigen Verbindungen und Polyolen hergestellt. Zur Schaumbildung finden überwiegend Treibgase Verwendung, die durch ihren niederen Siedepunkt physikalisch wirksam sind. Auch gezielte Treibgas-Kombinationen aus physikalisch wirksamen Treibgasen und Kohlendioxid, welches durch chemische Reaktion der Isocyanatgruppen mit Wasser beim Verschäumen entsteht, sind gut bekannt. Bei einer Reaktion von Wasser und Isocyanaten entstehen im Gegensatz zur Reaktion mit Polyolen neben Kohlendioxid Harnstoffgruppen, die zur Bildung des Zellgerüstes beitragen.

DE 390908361 beschreibt einen Gipsschaumstoff mit poriger Struktur sowie ein Verfahren zu seiner Herstellung für Schall- und Wärmedämmungen. Dabei wird eine Gips-Wasser-Suspension mit einem MDI-Prepolymeren ohne weitere Reaktionspartner in Anwesenheit eines Netzmittels gemischt und zu Formkörpern verschäumt.

Aus der DE 20 2009 001 754 U1 sind aus mineralischen Werkstoffen bestehende Abstandhalter welche sich zur Integration in eine Betonstruktur eignen bekannt. Die Betonstruktur der DE 20 2009 001 754 U1 offenbart alle Merkmale des einleitenden Teils des Anspruchs 1. Hierbei handelt es sich um einen glasbasierten akustisch wirksamen Schaumstoff welcher mit einem zementbasierten Stoff umhüllt sein kann, wobei eine Fläche des Schaumstoffs nicht umhüllt ist. Dieser Abstandshalter werden als Träger für die Bewehrung, insbesondere Bewehrungsstäbe verwendet. Der Abstandshalter wird hierbei so angeordnet, dass der glasbasierte akustisch wirksame Schaumstoff nach dem gießen des Betons und dem Entschalen offen liegt und somit als Schallabsorber wirken kann. Die so aufgebaute Betonstruktur hat jedoch den Nachteil, dass die Aufbauhöhe des Schallabsorbers nicht frei gewählt werden kann und durch die Bewehrung begrenzt wird. Um eine ausreichende Schallabsorption auch für tiefe Frequenzen zu erreichen ist man bei porösen Absorbern auf relativ dicke Schichten angewiesen. Somit müssen die Abstandshalter entsprechend groß dimensioniert werden, was zu dickeren Betonstrukturen führt. Neben bautechnischen Problemen wird hierdurch deutlich mehr Beton verbraucht, wobei in der Praxis in der Regel eine nicht optimale Schallabsorption in Kauf genommen werden muss.

Für die Bewehrung von Betonelementen eignet sich insbesondere Bewehrungsstahl, welcher als gerippter oder profilierter Rundstahl eingesetzt wird und eine hohe Zugfestigkeit aufweist. Die erforderlichen Eigenschaften sind beispielsweise in der DIN 488 (früher DIN 1045-1) oder in der Europäischen Norm EN 10080 geregelt. Der Bewehrungsstahl wird in verschiedenen Formen produziert. In Deutschland werden insbesondere folgende Ausführungen eingesetzt:
- Betonstabstahl B500B (nach DIN 488) (früher "BSt 500 S(B)"), als warmgewalzter und gerippter Stabstahl mit Durchmessern von 6, 8, 10, 12, 14, 16, 20, 25, 28, 32 und 40 mm und Lieferlängen bis 18 m
- Betonstahlmatten B500A und B500B (nach DIN 488) (früher "BSt 500 M(A) und (B)"), in verschiedenen Varianten, als fertig verschweißte Matten aus geripptem und profiliertem sowie kaltverformtem Stabstahl (Duktilitätsklasse A) oder warmgewalztem Betonstahl (Duktilitätsklasse B) mit Durchmessern von 6 mm bis 14 mm (14 mm nur in hochduktiler Ausführung, 6 bis 12 mm in normalduktiler oder hochduktiler Ausführung),
- Gitterträger als biegesteife Bewehrung insbesondere bei Halbfertigteildecken und -wänden
Die modernen Betonstähle sind bezüglich ihrer Verformungseigenschaften durch einen Elastizitätsmodul von 200.000 bis 210.000 N/mm² und die Einteilung in Duktilitätsklassen gekennzeichnet. In Deutschland gibt es die normalduktile Klasse A für die kaltverformten Stähle mit einem Verhältnis zwischen Zugfestigkeit und Fließgrenze von mindestens 1,05 und einer Stahldehnung unter Höchstlast von mindestens 2,5 % sowie die hochduktile Klasse B für die warmverformten Stähle mit mindestens 1,08 bzw. 5 %. Daneben muss der hochduktile Erdbebenstahl Klasse C mit einem Verhältnis zwischen Zugfestigkeit und Fließgrenze von mindestens 1,15 und einer Stahldehnung unter Höchstlast von mindestens 8 % erwähnt werden, der eine reduzierte Fließgrenze von 450 N/mm² besitzt.

Eine wichtige Eigenschaft des Betonstahls ist dessen Verbund mit dem umgebenden Beton. Zur Verbesserung des Verbunds werden Rippen aufgerollt oder aufgewalzt. Die Rippen haben eine maximale Höhe von 4,5 % und einen Abstand von 60 % des Stabdurchmessers. Durch die Rippen wird eine lokale Verzahnung zwischen dem Beton und dem Stahl erreicht, was eine optimale Kraftübertragung über eine kurze Verbundlänge ermöglicht.

Aufgabe der vorliegenden Erfindung ist deshalb die Bereitstellung eines bewehrten Betonelements mit mindestens einem integrierten Schallabsorber, wobei die Aufbauhöhe des Schallabsorbers in weiten Grenzen frei gewählt werden kann, so dass eine optimale Schallabsorption erreicht wird, ohne hierbei die Dicke des Betonelements variieren zu müssen.

Gelöst wurde diese Aufgabe durch ein bewehrtes Betonelement umfassend einen auf einer Oberfläche des Betonelements teilweise freiliegenden Schall absorbierenden, zumindest teilweise offenzelligen geschäumten Werkstoff, wobei die Oberfläche, auf der der geschäumte Werkstoff freiliegt, nur teilweise aus dem geschäumten Werkstoff besteht und wobei die Bewehrung teilweise von dem geschäumten Werkstoff umschlossen ist.

Abgesehen davon, dass die gestellte Aufgabenstellung vollständig gelöst wurde, hat das erfindungsgemäße Betonelement den Vorteil, dass dieses einfach und kostengünstig herstellbar ist und einen schnellen Baufortschritt ermöglicht.

In einer bevorzugten Ausführungsform ist das Betonelement plattenförmig und in der Erstreckungsrichtung von der einen Oberfläche mit dem teilweise freiliegenden geschäumten Werkstoff zur gegenüberliegenden Oberfläche, nicht vollständig von dem geschäumten Werkstoff durchzogen. Je nach Verwendungszweck hat das erfindungsgemäße plattenförmige Betonelement in dieser Erstreckungsrichtung bevorzugt eine Gesamtdicke von 5 bis 50 cm, insbesondere 12 cm bis 25 cm. Der geschäumte Werkstoff kann hierbei in der Erstreckungsrichtung von der Oberfläche mit dem teilweise freiliegenden geschäumten Werkstoff zur gegenüberliegenden Oberfläche bevorzugt eine maximale Dicke von 1 cm bis 20 cm, insbesondere 3 cm bis 10 cm und besonders bevorzugt 4 bis 6 cm haben.

Bei der erfindungsgemäßen Bewehrung kann es sich insbesondere um Bewehrungsstahl handeln. Die eingesetzte Dicke, Form und Qualität des Bewehrungsstahls ist vom jeweiligen Einsatzzweck des Betonelements abhängig. Insbesondere geeignet sind geschweißte oder gebundene Betonstahlmatten und Gitterträger. Bevorzugt wird Bewehrungsstahl eingesetzt welcher der Norm DIN 488 entspricht.

Die Bewehrung ist erfindungsgemäß teilweise von dem geschäumten Werkstoff umschlossen. Hierunter wird verstanden, dass bevorzugt zwischen 5 und 60 Volumenprozent, insbesondere bevorzugt 10 bis 30 Volumenprozent der Bewehrung von dem geschäumten Werkstoff umschlossen sind.

In einer bevorzugten Ausführungsform besteht die Oberfläche des Betonelements, auf der der geschäumte Werkstoff freiliegt, zu 10 bis 40 Flächenprozent, insbesondere 15 bis 25 Flächenprozent aus dem geschäumten Werkstoff. Es ist hierbei besonders bevorzugt, dass der geschäumte Werkstoff in periodischen Abständen streifenförmig auf der Oberfläche des Betonelements verteilt ist. Insbesondere kann es sich um Absorberstreifen handeln, welche eine Breite von 5 und 10 cm aufweisen und in einer Periode von 25 bis 35 cm angeordnet sind. Es hat sich hierbei gezeigt, dass eine derartige Anordnung besonders vorteilhaft ist, da die Admittanzsprünge zwischen schallharten und schallabsorbierenden Materialien zu einer erhöhten Schallabsorption führen.

Bei dem erfindungsgemäßen bewehrten Betonelement kann es sich beispielsweise um ein Fertigteil handeln, welches nachfolgend zum Bau eines Gebäudes verwendet wird. Insbesondere kann es sich um eine Decken-, Wand- oder ein Dachkonstruktion handeln. Besonders bevorzugt kann es sich bei dem Betonelement um eine Akustikdecke handeln, welche bevorzugt auf der Baustelle hergestellt wird. Weiterhin ist es aber auch möglich die erfindungsgemäßen bewehrten Betonelemente als Schallschutzelemente an Straßen- und Eisenbahnlinien einzusetzen.

Das als geschäumter Werkstoff eingesetzte Material kann insbesondere mindestens einen Schaum aus der Reihe Polyurethanschaum, Geopolymerschaum und Melaminharzschaum umfassen. Der geschäumte Werkstoff weist bevorzugt eine Dichte von 200 bis 400 kg/m³, besonders bevorzugt 240 bis 350 kg/m³ und insbesondere maximal 300 kg/m³ auf. Die Dichte ist hierbei auf den trockenen geschäumten Werkstoff bezogen, wobei unter "trocken" eine Restfeuchte von weniger als 3 Gew.-% verstanden wird. Insbesondere kann der geschäumte Werkstoff zu 20 bis 90 Volumen-%, insbesondere 50 bis 60 Volumen-% aus Luft bestehen. In einer bevorzugten Ausführungsform liegt der freiliegende Schall absorbierende geschäumte Werkstoff als offenzelliger geschäumter Werkstoff vor.

Als Polyurethanschäume eignen sich die nach dem Stand der Technik bekannten Akustikschäume. Einen Überblick hinsichtlich offenzelliger PUR-Schäume bietet G. Oertel, Polyurethane, Becker Braun Kunststoffhandbuch 7, Hanser Verlag München 1983.

Insbesondere bevorzugt kann der geschäumte Werkstoff einen Geopolymerschaum umfassen. In einer besonderen Ausführungsform besteht der geschäumte Werkstoff aus einem Geopolymerschaum.

Geopolymere sind zementartige Materialien, die durch Umsetzung von mindestens zwei Komponenten gebildet werden. Bei der ersten Komponente handelt es sich um eine reaktive Feststoffkomponente, welche SiO₂ und Al₂O₃ enthält, z. B. Flugasche oder Metakaolin. Die zweite Komponente ist ein alkalischer Aktivator, z.B. Natrium-Wasserglas oder Natriumhydroxid. In Gegenwart von Wasser kommt es durch den Kontakt der beiden Komponenten zur Erhärtung durch Bildung eines alumosilikatischen, amorphen bis teilkristallinen Netzwerkes, welches wasserbeständig ist.

Der Prozess der Erhärtung erfolgt in Lösungen mit pH-Werten über 12 und unterscheidet sich vom Hydratationsprozess anorganischer Bindemittel, wie z.B. des Portlandzements. Bei diesem Prozess, der vorwiegend über die "Lösung" stattfindet, erfolgt ein Einbau von Al-Atomen und wahrscheinlich auch der Ca-, Mg-Atome in das ursprüngliche Silikatgitter der reaktiven Feststoffkomponente. Die Eigenschaften der nach dieser Methode hergestellten Produkte sind insbesondere von der Konzentration des alkalischen Aktivators und den Feuchtigkeitsverhältnissen abhängig.

Geopolymere wurden bereits in den 1950er Jahren von Glukhovsky untersucht. Das Interesse der Industrie an diesen Bindemitteln hat aufgrund der interessanten Eigenschaften dieser Systeme in den vergangenen Jahren beträchtlich zugenommen. Alkaliaktivierte Alumosilikat-Bindemittel gestatten Festigkeiten, die jene von Standardportlandzementen übersteigen können. Weiterhin härten diese Systeme sehr schnell aus und weisen eine sehr hohe Chemikalienresistenz und Temperaturbeständigkeit auf.

Einen Überblick hinsichtlich der als alkalisch-aktivierbare Alumosilikatbindemittel in Frage kommenden Substanzen gibt die Literaturstelle Alkali-Activated Cements and Concretes, Caijun Shi, Pavel V. Krivenko, Della Roy, (2006), 30-63 und 277-297.

In einer weiterhin bevorzugten Ausführungsform umfasst der geschäumte Werkstoff, insbesondere im Fall des Geopolymerschaums, ein Epoxidharz. Hierdurch können die mechanischen Eigenschaften verbessert werden, insbesondere im Hinblick auf die Rissbildung, Biegezugfestigkeit und die Haptik des geschäumten Werkstoffs.
Die erfindungsgemäßen Geopolymerschäume haben den wesentlichen Vorteil, dass sie nicht brennbar sind und weiterhin im Vergleich zu einigen anderen Schäumen, wie etwa Melaminharzschäumen, kein Formaldehyd freisetzen können.
Der Anteil des Epoxidharzes, bezogen auf den trockenen Geopolymerschaum, kann insbesondere von 0,5 bis 10 Gew.-% betragen. Im Hinblick auf die Nichtbrennbarkeit des erfindungsgemäßen Betonelements hat sich insbesondere ein Anteil von 1 bis 5 Gew.-% als besonders vorteilhaft erwiesen.

Im Rahmen der vorliegenden Erfindung wird unter dem Begriff "trockener Geopolymerschaum" ein Schaum mit einer Restfeuchte von weniger als 3 Gew.-% verstanden.

Ein weiterer Gegenstand der vorliegenden Erfindung ist ein Verfahren zur Herstellung eines erfindungsgemäßen Betonelements, wobei die Bewehrung und der Schall absorbierende geschäumten Werkstoff in Form einer reaktiven fließfähigen Masse in eine Schalung eingebracht werden und die reaktive fließfähige Masse zumindest teilweise ausgehärtet wird.

Die reaktive fließfähige Masse kann hierbei bereits als Schaum in die Schalung eingebracht werden oder erst nach dem Einbringen in die Schalung einen Schaum bilden. Wesentlich ist hierbei, dass vor der Zugabe des Betons die Bewehrung teilweise von dem geschäumten Werkstoff umschlossen wird.

Bevorzugt wird zunächst die Schalung mit der Bewehrung erstellt und in einem nachfolgenden Schritt der geschäumte Werkstoff in Form einer reaktiven fließfähigen Masse eingebracht, so dass die Bewehrung teilweise von dem geschäumten Werkstoff umschlossen wird. Es ist aber weiterhin auch möglich zunächst den geschäumten Werkstoff in Form einer reaktiven fließfähigen Masse in die Schalung einzubringen und nachfolgend die Bewehrung einzulegen. Nach dem zumindest teilweisen Aushärten der reaktiven fließfähigen Masse wird Beton in die Schalung eingebracht und erhärten gelassen.

In einer besonders bevorzugten Ausführungsform umfasst die reaktive fließfähige Masse ein alkali-aktiviertes Alumosilikat-Bindemittel, wobei der Begriff alkali-aktiviertes Alumosilikat im Rahmen der vorliegenden Anmeldung synonym zu dem Begriff Geopolymer zu verstehen ist.

Wie bereits ausgeführt kann der geschäumte Werkstoff einen Geopolymerschaum umfassen und in einer besonders bevorzugten Ausführungsform aus einem Geopolymerschaum bestehen. Hierbei kann die reaktive fließfähige Masse als Feststoffkomponente, welche SiO₂ und Al₂O₃ enthält, erfindungsgemäß insbesondere mindestens ein Alumosilikat aus der Reihe der natürlichen Alumosilikate und/oder synthetischen Alumosilikate, insbesondere Hüttensandmehl, Mikrosilika, Trassmehl, Ölschiefer, Metakaolin, Flugasche, insbesondere vom Typ C und Typ F, Hochofenschlacke, aluminiumhaltiger Silikastaub, Puzzolane, Basalt, Tone, Mergel, Andesite, Kieselgur oder Zeolithe, insbesondere bevorzugt Hüttensandmehl, Flugasche, Mikrosilica, Schlacke, Ton und Metakaolin umfassen. Die erfindungsgemäße reaktive fließfähige Masse enthält diese Feststoffkomponente vorzugsweise in einer Menge von 5 bis 70 Gew.-%, bevorzugt von 10 bis 50 Gew.-%, und insbesondere von 15 bis 30 Gew.-%, wobei es sich auch um Mischungen handeln kann. Für die Härtungsreaktion der Geopolymere ist insbesondere das Verhältnis von Silicium- zu Aluminium-Atomen von großer Bedeutung. In dem erfindungsgemäßen System hat sich ein Verhältnis von Silicium- zu Aluminium-Atomen zwischen 10 und 1,0 zu 1,0 als vorteilhaft erwiesen, wobei ein Verhältnis zwischen 6 und 1,5 zu 1,0 und insbesondere zwischen 1,8 und 2,2 zu 1,0 sowie zwischen 4,7 und 5,3 zu 1,0 bevorzugt ist.

Als alkalischer Aktivator eignet sich insbesondere mindestens eine Verbindung aus der Reihe Natrium-Wasserglas, Kalium-Wasserglas, Lithium-Wasserglas, Ammonium-Wasserglas, Natriumhydroxid, Kaliumhydroxid, Natriumcarbonat, Kaliumcarbonat, Alkalisulfate, Natriummetasilikat, Kaliummetasilikat, bevorzugt Kalium-Wasserglas, Natrium-Wasserglas und Kalilauge. Insbesondere kann auch Kaliummetasilikat-Lösung mit einem Feststoffgehalt von 40-50 Gew.-% und einem Gewichtsverhältnis SiO₂:K₂O von 0,6 bis 0,8 oder einem Molverhältnis von 0,9 bis 1,1 eingesetzt werden. Weiterhin bevorzugt kann Kalilauge mit einer Konzentration von 0,1-1 mol/l eingesetzt werden, besonders bevorzugt ist eine Konzentration von mindestens 0,9 mol/l. Erfindungsgemäß ist der alkalische Aktivator bezogen auf die erfindungsgemäße reaktive fließfähige Masse vorzugsweise in einer Menge von 1 bis 60 Gew.-%, bevorzugt von 10 bis 55 Gew.-%, und insbesondere von 25 bis 50 Gew.-% enthalten, wobei es sich auch um Mischungen dieser Verbindungen handeln kann.

Bei den Füllstoffen kommen unter anderem Gesteinsmehl, Basalte, Tone, Feldspate, Glimmermehl, Glasmehl, Graphitpulver, Quarzsand oder Quarzmehl, Bauxitmehl, Tonerdehydrat und Abfälle der Tonerde-, Bauxit-, oder Korundindustrie, Aschen, Schlacken, amorphes Silika, pyrogene Kieselsäure, Microsilica, Kalkstein sowie mineralische Fasermaterialien in Frage. Geeignet sind hierbei insbesondere Korngrößen von bis zu 2 mm. Auch Leichtfüllstoffe wie Perlite, Kieselgur (Diatomeenerde), Blähglimmer (Vermiculit), Blähglas und Schaumsand können verwendet werden. Bevorzugt werden Leichtfüllstoffe und insbesondere Blähglas eingesetzt. Insbesondere bevorzugt hat das Blähglas eine mittlere Korngröße von 50-300 µm. Erfindungsgemäß ist der Füllstoff bezogen auf die erfindungsgemäße reaktive fließfähige Masse vorzugsweise in einer Menge von 5 bis 50 Gew.-%, bevorzugt von 10 bis 35 Gew.-% enthalten, wobei es sich auch um Mischungen dieser Verbindungen handeln kann.

Zur weiteren Verbesserung der mechanischen Eigenschaften wie Biegezugfestigkeit und Druckfestigkeit kann die erfindungsgemäße reaktive fließfähige Masse Alumosilikat in Form von Mikrohohlkugeln mit einer bevorzugten Korngröße von maximal 100 µm umfassen. Vorzugsweise beträgt der Anteil von Mikrohohlkugeln bezogen auf die erfindungsgemäße reaktive fließfähige Masse jedoch maximal 30 Gew.-%, wobei ein bevorzugtes Verhältnis Mikrohohlkugeln zu den übrigen Alumosilikaten bei 0,8 : 1 bis 1 zu 0,8 liegt.

Es ist weiterhin möglich, dass die erfindungsgemäße reaktive fließfähige Masse Fasern umfasst, insbesondere in einem Anteil von bis zu 3 Gew.-%. Hierdurch kann die mechanische Stabilität des Schaumes verbessert werden. Vorzugsweise werden Polyvinylalkoholfasern, Polyacrylnitrilfasern, Basaltfasern, sowie Mischungen daraus verwendet. Insbesondere weisen die Fasern eine Länge von maximal 120 mm, insbesondere maximal 6 mm auf.

Zur Verbesserung wasserabweisender Wirkung des Schaumes kann dieser ein Hydrophobierungsmittel umfassen. Der Anteil des Hydrophobierungsmittels kann insbesondere bis zu 3 Gew.-% bezogen auf die erfindungsgemäße reaktive fließfähige Masse betragen. Bevorzugt werden Silikonöle oder redispergierbare Dispersionspulver mit hydrophobierender Eigenschaft eingesetzt. Bevorzugt kann ein Silikonöl mit einer Viskosität von 300 bis 1000 mPa*s verwendet werden. Ein geeignetes kommerziell verfügbares Produkt ist beispielsweise Silikonöl AK 500 der Wacker Chemie AG. Weiterhin kann beispielsweise redispergierbares Dispersionspulver des Typ Vinnapas mit der Bezeichnung 7031 H der Wacker Chemie AG eingesetzt werden.

Das Erstarrungsverhalten und die Abbindezeit der erfindungsgemäßen reaktiven fließfähigen Masse kann positiv durch die Zugabe von Calciumaluminatzement beeinflusst werden. Vorzugsweise beträgt der Anteil des Calciumaluminatzementes an der reaktiven fließfähigen Masse mindestens 3 Gew.-%, bevorzugt zwischen 5 und 20 Gew.-%. Die Abbindezeit kann weiterhin durch die Zugabe von Ca(OH)₂ gesteuert werden. Der Anteil von Ca(OH)₂, bezogen auf die erfindungsgemäße reaktive fließfähige Masse, kann von 1 bis 15 Gew.-%, insbesondere von 3 bis 10 Gew.-% betragen.

In einer besonders bevorzugten Ausführungsform umfasst die erfindungsgemäße reaktive fließfähige Masse einen Luftporenbildner und/oder Schaumstabilisator. Hierbei kann es sich bevorzugt um ein Tensid handeln. Insbesondere kann es sich bei dem Tensid um mindestens ein C8-C10 Alkylglucosid handeln. Ein Teil des Tensids, bevorzugt weniger als 30 Gew.-%, kann durch verseifte Balsam- und Talharze ersetzt werden. Beispielsweise kann hierbei Vinapor MTZ/K50 der BASF SE eingesetzt werden, wobei es sich um pulverförmiges, sprühgetrocknetes modifiziertes und verseiftes Balsam- und Tallharz handelt.
Der Anteil des Tensids, bezogen auf die erfindungsgemäße reaktive fließfähige Masse, kann insbesondere von 0,1 bis 2,5 Gew.-%, insbesondere von 0,5 bis 1,5 Gew.-% betragen.

Eine besonders bevorzugte Ausführungsform des erfindungsgemäßen Verfahrens sieht vor, dass die erfindungsgemäße reaktive fließfähige Masse ein Tensid umfasst und durch mechanischen Eintrag von Luft aufgeschäumt wird. Bevorzugt für die akustische Wirksamkeit sollte der Schaum ein Luftgehalt von 50-60 Volumen-% aufweisen. In einer speziellen Ausführungsform werden die Komponenten der erfindungsgemäßen reaktiven fließfähigen Masse mit dem Tensid gemischt, wobei beispielsweise ein handelsüblicher Baustellenmischer zum Einsatz kommen kann. Hierbei wird bevorzugt eine Suspension mit einer Dichte von 1000-1200 g/Liter gebildet. Diese Suspension kann anschließend in einem Mischkopf, der nach dem Stator-Rotor Arbeitsprinzip aufgebaut ist, mit Luft geschäumt werden. Ein geeignetes Gerät ist hierbei beispielsweise das Modell Mügromix+ der Firma Heitec Auerbach GmbH. Bevorzugt beträgt die Nassrohdichte des Schaums 100 bis 800 g/Liter, insbesondere 150 bis 600 g/Liter.

In einer weiterhin bevorzugten Ausführungsform umfasst die reaktive fließfähige Masse mindestens eine wasseremulgierbare Epoxidverbindung und/oder mindestens eine selbstemulgierende Epoxidharzemulsion. Neben den bereits beschrieben Vorteilen verleiht das Epoxidharz dem Geopolymerschaum eine frühere mechanische Stabilität, so dass erfindungsgemäße bewehrte Betonelement bereits nach 6 Stunden aus der Form entnommen werden kann.

Die Epoxidverbindungen können ein Harz und Härter oder eine Kombination von Harz, Härter und Reaktivverdünner umfassen. Beim dem Epoxid handelt sich bevorzugt um eine Bisphenol A/F Mischung und bei dem Härter bevorzugt um ein Polyaminoaddukt. Als Reaktivverdünner werden bevorzugt Polyglycidether von alkoxylierten aliphatischen Alkoholen eingesetzt.

In einer bevorzugten Ausführungsform wird ein Epoxidharz mit einem Reaktivverdünner im Verhältnis von 60:40 bis 40:60 Gewichtsteilen gemischt und weiterhin bevorzugt werden zu dieser Mischung 140 bis 160 Gewichtsteile Härter zugegeben.

Als Epoxidharz kann insbesondere eine selbstdispergierende Epoxidharzemulsion eingesetzt werden, welche bevorzugt im stöchiometrischen Verhältnis von 0,9 bis 1,1 zu 1 mit einem Polyaminoamidaddukt verwendet wird. Als kommerziell verfügbare selbstdispergierende Epoxidharzemulsionen kommen beispielsweise Waterpoxy 1422, Waterpoxy 1439, Waterpoxy 1466 und Härter Waterpoxy 751, Waterpoxy 760, Waterpoxy 801 in Frage. Bevorzugt ist der Einsatz einer Mischung von Waterpoxy 1422 und Waterpoxy 760. Die genannten Epoxidharzemulsionen sind Produkte der BASF SE.

Das erfindungsgemäße Verfahren sieht vor, dass der Geopolymerschaum bevorzugt bei Temperaturen von 20 bis 30°C und einer relativen Luftfeuchtigkeit von mindestens 65% getrocknet wird. Die Ausschalung des erfindungsgemäßen plattenförmigen bewehrten Betonelements kann nach 24 bis 48 Stunden erfolgen.

Als weiterer Vorteil der Verwendung eines Schaums auf Basis von Geopolymeren ist das vorteilhafte Brandverhalten zu nennen. Auch bei der Verwendung von organischen Zusätzen, insbesondere auch in Anwesenheit von Epoxidharzen, wurden sehr gute Ergebnisse erzielt. Es entsteht kein Rauch oder abtropfendes Material während der Beflammung (DIN EN ISO 11925-2). Der erfindungsgemäße Geopolymerschaum weist hierbei insbesondere ein Brandverhaltenen nach DIN 13501-1 von A2 oder A1 auf.

Weiterhin ist es auch möglich das erfindungsgemäße plattenförmige bewehrte Betonelement mit einer Verkleidung zu versehen, wobei darauf zu achten ist, dass hierdurch die schallabsorbierenden Eigenschaften des Elements nicht wesentlich verschlechtert werden. Insbesondere geeignet sind hierbei Wollvlies, Putz, Farbe und Textilien mit einer offenporigen, schalloffenen Struktur. Insbesondere die Textilen können mit einem Druckmotiv versehen sein.
Ein weiterer Aspekt der vorliegenden Erfindung ist die Verwendung des erfindungsgemäßen Betonelements als Akustikdecke in einem Gebäude.

In den Zeichnungen zeigt
Figur 1 eine Aufsicht auf ein erfindungsgemäßes Deckenelement mit periodisch angeordneten Absorberstreifen;
Figur 2 einen schematischen Querschnitt eines erfindungsgemäßen Deckenelements mit periodisch angeordneten Absorberstreifen, wobei die Bewehrung parallel zur Oberfläche des Betonelements ausgerichtet ist;
Figur 3 einen schematischen Querschnitt eines erfindungsgemäßen Deckenelements mit den periodisch angeordneten Absorberstreifen, wobei es sich bei der Bewehrung um einen Gitterträger handelt;

Die Erfindung wird im Folgenden unter Bezugnahme auf die beigefügten Zeichnungen näher erläutert.

### Beispiele

### Herstellung des Geopolymerschaums

**Tabelle1:**

| | Handelsname (Hersteller) | Masse [Gramm] | Gew.-% |
|---|---|---|---|
| Kalilauge 1mol/Liter | Emsure (Merck KGaA) | 50,04 | 16,41 |
| Kaliumwasserglas | K45M (Simtek Corporation) | 87,50 | 28,69 |
| Tensid | Glucopon DK225 (BASF SE) | 2,20 | 0,72 |
| Metakaolin | Metamax (BASF SE) | 71,10 | 23,32 |
| Blähglas | Fillite 106 (Omya GmbH) | 55,60 | 18,23 |
| Flugasche | Lühnen (STEAG Power Minerals GmbH) | 15,50 | 5,08 |
| Dispersionspulver | Acronal S430 P (BASF SE) | 15,00 | 4,92 |
| PAN-Faser | 6,7dtex/6mm (Trevira GmbH) | 8,00 | 2,62 |
| Gesamte Masse | | 304,94 | 100,00 |

Der Geopolymerschaum wird mit einem Schaumvollautomat für kontinuierliches Verschäumen von Flüssigkeiten und niederviskosen Pasten hergestellt, der nach dem Stator-Rotor-Prinzip arbeitet (Typ Mügromix+ der Firma Heitec Auerbach GmbH).

Die in Tabelle 1 aufgeführten Komponenten werden bis auf das Tensid in einem Baustellenmischer (Zwangsmischer XM der Collomix Rühr- und Mischgeräte GmbH) gemischt. Es entsteht ein Suspension mit einer Dichte von 1000-1200 g/Liter. Zum Schluss wird das Tensid zugegeben und für weitere 30 Sekunden gemischt. Die Suspension wird über einen Schlauch in den Schaumvollautomaten gepumpt.
Die Prozessparameter sind wie folgt:
- Mischkopfdrehzahl 300 Umdrehungen/Minute
- Systemluftdruck ∼2 bar
- Materialdurchsatz 120 Liter/Stunde
Der erzeugte Schaum hat eine Dichte von 375 g/Liter und weist einen Luftgehalt von 55 Vol-% auf. Der Luftgehalt wird hierbei über die Änderung des Volumens gegenüber der ungeschäumten Suspension in Anlehnung an die DIN EN 1015-6 bestimmt. Der Schaum weist eine Trockenrohdichte von 274 kg/m³ auf. Die Rohdichte des hergestellten Schaumes wird durch den Quotienten aus seiner Masse und dem Volumen bestimmt, das der Schaum einnimmt.

### Beispiel 1

Das erfindungsgemäße Deckenelement ist 1 m x 1,5 m x 0,12 m groß. Ein Bewehrungsnetz B500A (nach DIN 488) mit einer Maschenweite von 100 mm x 100 mm, wobei die Stahlstäbe einen Durchmesser von 6 mm aufweisen, wird zunächst in eine entsprechende Schalung montiert. Anschließend wird der Geopolymerschaum, der wie oben beschrieben erhalten wird, auf die Bewehrung streifenförmig aufgesprüht und für 2 Stunden bei 25°C und 80% Luftfeuchtigkeit getrocknet und anschließend betoniert. Für die Herstellung der Deckenelemente wird ein Ortbeton der Festigkeitsklasse C25/30 mit einer maximalen Korngröße von 8 mm gewählt. Der Frischbeton weist eine Dichte von 2328 kg/m³ auf und besitzt eine Konsistenzklasse von F5.

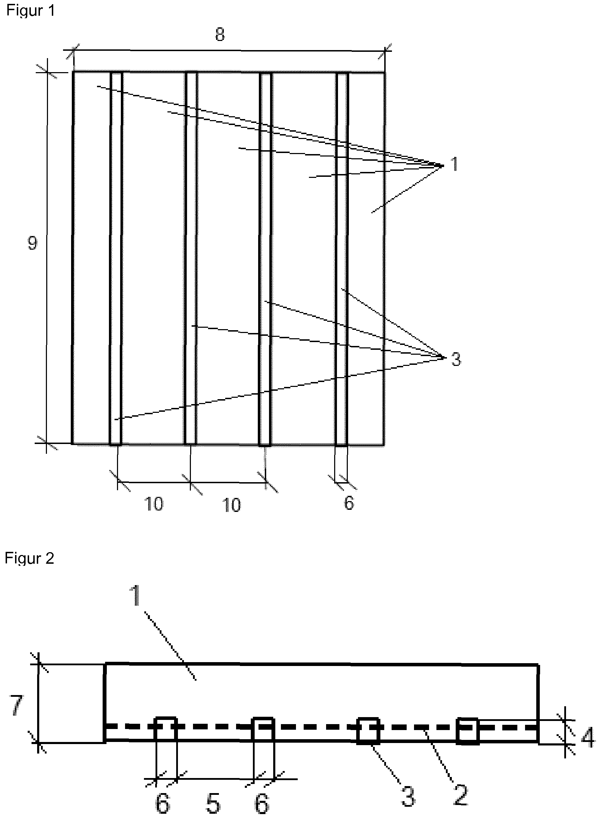

In Figur 1 ist dieses erfindungsgemäße Deckenelement dargestellt. Das Deckenelement hat eine Breite von 100 cm (Bezugszeichen 8) und eine Länge von 150 cm (Bezugszeichen 9). Es weist Absorberstreifen aus Geopolymer 3 auf. Die Absorberstreifen aus Geopolymerschaum sind in einem Abstand von 25 cm (Bezugszeichen 10) auf der Oberfläche angeordnet. Die Absorberstreifen aus Geopolymerschaum haben eine Breite von 5 cm (Bezugszeichen 6). Weiterhin wird die Oberfläche durch Streifen aus Beton 1 gebildet.

In Figur 2 ist dieses erfindungsgemäße Deckenelement im Querschnitt dargestellt. Das Deckenelement hat eine Aufbauhöhe von 12 cm (Bezugszeichen 7) und weist Absorberstreifen aus Geopolymerschaum 3 auf. Die Absorberstreifen aus Geopolymerschaum haben eine Breite von 5 cm (Bezugszeichen 6) und eine Aufbauhöhe von 5 cm (Bezugszeichen 4) und sind in einem Abstand von 20 cm (Bezugszeichen 5) angeordnet. Das Deckenelement besteht weiterhin aus Beton 1. Die Bewehrung 2 ist eine Baustahlmatte B500A (nach DIN 488) mit einer Maschenweite 100 mm x 100 mm, wobei die Stahlstäbe einen Durchmesser von 6 mm aufweisen. Die Bewehrung ist teilweise von dem Absorberstreifen aus Geopolymerschaum umschlossen und parallel zur Oberfläche des Betonelements ausgerichtet.

### Beispiel 2

Das Beispiel 2 unterscheidet sich von Beispiel 1 dadurch, dass als Bewehrung ein Gitterträger eingesetzt wird.

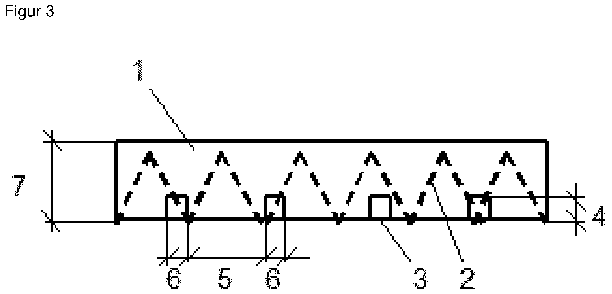

In Figur 3 ist dieses erfindungsgemäße Deckenelement im Querschnitt dargestellt. Das Deckenelement hat eine Aufbauhöhe von 12 cm (Bezugszeichen 7) und weist Absorberstreifen aus Geopolymerschaum 3 auf. Die Absorberstreifen aus Geopolymerschaum haben eine Breite von 5 cm (Bezugszeichen 6) und eine Aufbauhöhe von 5 cm (Bezugszeichen 4) und sind in einem Abstand von 20 cm (Bezugszeichen 5) angeordnet. Das Deckenelement besteht weiterhin aus Beton 1. Die der Bewehrung handelt sich es um einen Gitterträger mit der Bezeichnung Filligran-E-Gitterträger der Filigran Trägersysteme GmbH & Co. Der Gitterträger besteht aus Stahlbeton B500A (nach DIN488), wobei die Stahlstäbe einen Durchmesser von 6 mm aufweisen. Die Bewehrung ist teilweise von dem Absorberstreifen aus Geopolymerschaum umschlossen.

## Patentansprüche

1. Bewehrtes Betonelement umfassend einen auf einer Oberfläche des Betonelements teilweise freiliegenden Schall absorbierenden, zumindest teilweise offenzelligen geschäumten Werkstoff (3), wobei die Oberfläche, auf der der geschäumte Werkstoff freiliegt, nur teilweise aus dem geschäumten Werkstoff besteht, **dadurch gekennzeichnet, dass** die Bewehrung (2) teilweise von dem geschäumten Werkstoff (3) umschlossen ist.

2. Betonelement nach Anspruch 1, **dadurch gekennzeichnet, dass** das Betonelement plattenförmig ist und in der Erstreckungsrichtung von der Oberfläche mit dem teilweise freiliegenden geschäumten Werkstoff zur gegenüberliegenden Oberfläche, nicht vollständig von dem geschäumten Werkstoff durchzogen wird.

3. Betonelement nach Anspruch 1 oder 2, **dadurch gekennzeichnet, dass** die Oberfläche, auf der der geschäumte Werkstoff freiliegt, zu 10 bis 40 Flächenprozent aus dem geschäumten Werkstoff besteht.

4. Betonelement nach einem der Ansprüche 1 bis 3, **dadurch gekennzeichnet, dass** der geschäumte Werkstoff in periodischen Abständen (10) streifenförmig auf der Oberfläche verteilt ist.

5. Betonelement nach einem der Ansprüche 1 bis 4, **dadurch gekennzeichnet, dass** der geschäumte Werkstoff einen Geopolymerschaum umfasst.

6. Betonelement nach einem der Ansprüche 1 bis 5, **dadurch gekennzeichnet, dass** der geschäumte Werkstoff eine Dichte von 200 bis 400 kg/m³ aufweist.

7. Betonelement nach einem der Ansprüche 1 bis 6, **dadurch gekennzeichnet, dass** der geschäumte Werkstoff ein Epoxidharz umfasst.

8. Betonelement nach einem der Ansprüche 1 bis 7, **dadurch gekennzeichnet, dass** der geschäumte Werkstoff zu 20 bis 90 Volumenprozent aus Luft besteht.

9. Betonelement nach einem der Ansprüche 1 bis 8, **dadurch gekennzeichnet, dass** es sich um eine Decken-, Wand- oder ein Dachkonstruktion handelt.

10. Verfahren zur Herstellung eines Betonelements nach einem der Ansprüche 1 bis 9, **dadurch gekennzeichnet, dass** die Bewehrung (2) und der Schall absorbierende geschäumten Werkstoff (3) in Form einer reaktiven fließfähigen Masse in eine Schalung eingebracht werden und die reaktive fließfähige Masse zumindest teilweise ausgehärtet wird.

11. Verfahren zur Herstellung eines Betonelements nach Anspruch 10, **dadurch gekennzeichnet, dass** die reaktive fließfähige Masse ein alkali-aktiviertes Alumosilikat-Bindemittel umfasst.

12. Verfahren zur Herstellung eines Betonelements nach Anspruch 10 oder 11, **dadurch gekennzeichnet, dass** die reaktive fließfähige Masse ein Tensid umfasst und durch mechanischen Eintrag von Luft aufgeschäumt wird.

13. Verfahren zur Herstellung eines Betonelements nach einem der Ansprüche 10 bis 12, **dadurch gekennzeichnet, dass** die reaktive fließfähige Masse mindestens eine wasseremulgierbare Epoxidverbindung und/oder mindestens eine selbstemulgierende Epoxidharzemulsion umfasst.

14. Verfahren zur Herstellung eines Betonelements nach einem der Ansprüche 10 bis 13, **dadurch gekennzeichnet, dass** die reaktive fließfähige Masse Fasern umfasst.

15. Verwendung eines Betonelements nach einem der Ansprüche 1 bis 9 als Akustikdecke in einem Gebäude.

## Claims

1. Reinforced concrete element comprising a sound-absorbing, at least partially open-cell foamed material (3), which is partially exposed on a surface of the concrete element, wherein the surface on which the foamed material is exposed consists only partially of the foamed material, **characterized in that** the reinforcement (2) is partially enclosed by the foamed material (3).

2. Concrete element according to Claim 1, **characterized in that** the concrete element is plate-shaped and is not completely permeated by the foamed material in the extension direction from the surface having the partially exposed foamed material to the opposing surface.

3. Concrete element according to Claim 1 or 2, **characterized in that** the surface on which the foamed material is exposed consists 10 to 40% by area of the foamed material.

4. Concrete element according to any one of Claims 1 to 3, **characterized in that** the foamed material is distributed at periodic intervals (10) in the form of strips on the surface.

5. Concrete element according to any one of Claims 1 to 4, **characterized in that** the foamed material comprises a geopolymer foam.

6. Concrete element according to any one of Claims 1 to 5, **characterized in that** the foamed material has a density of 200 to 400 kg/m³.

7. Concrete element according to any one of Claims 1 to 6, **characterized in that** the foamed material comprises an epoxy resin.

8. Concrete element according to any one of Claims 1 to 7, **characterized in that** the foamed material consists 20 to 90% by volume of air.

9. Concrete element according to any one of Claims 1 to 8, **characterized in that** it is a ceiling, wall, or roof structure.

10. Method for producing a concrete element according to any one of Claims 1 to 9, **characterized in that** the reinforcement (2) and the sound-absorbing foamed material (3) are introduced in the form of a reactive free-flowing mass into a formwork and the reactive free-flowing mass is at least partially cured.

11. Method for producing a concrete element according to Claim 10, **characterized in that** the reactive free-flowing mass comprises an alkali-activated aluminosilicate binder.

12. Method for producing a concrete element according to Claim 10 or 11, **characterized in that** the reactive free-flowing mass comprises a surfactant and is foamed by mechanical introduction of air.

13. Method for producing a concrete element according to any one of Claims 10 to 12, **characterized in that** the reactive free-flowing mass comprises at least one water-emulsifiable epoxy compound and/or at least one self-emulsifying epoxy resin emulsion.

14. Method for producing a concrete element according to any one of Claims 10 to 13, **characterized in that** the reactive free-flowing mass comprises fibers.

15. Use of a concrete element according to any one of Claims 1 to 9 as an acoustic ceiling in a building.

## Revendications

1. Élément en béton armé comprenant un matériau moussé (3) au moins partiellement à cellules ouvertes, absorbant le son, partiellement exposé sur une surface de l'élément en béton, la surface sur laquelle le matériau moussé est exposé n'étant constituée qu'en partie du matériau moussé, **caractérisé en ce que** l'armement (2) est en partie entouré par le matériau moussé (3).

2. Élément en béton selon la revendication 1, **caractérisé en ce que** l'élément en béton est en forme de plaque et n'est pas traversé en totalité par le matériau moussé dans la direction d'extension depuis la surface comprenant le matériau moussé partiellement exposé vers la surface opposée.

3. Élément en béton selon la revendication 1 ou 2, **caractérisé en ce que** la surface sur laquelle le matériau moussé est exposé est constituée du matériau moussé à hauteur de 10 à 40 pour cent de la surface.

4. Élément en béton selon l'une quelconque des revendications 1 à 3, **caractérisé en ce que** le matériau moussé est réparti à écarts périodiques (10) sous la forme de bandes sur la surface.

5. Élément en béton selon l'une quelconque des revendications 1 à 4, **caractérisé en ce que** le matériau moussé comprend une mousse de géopolymère.

6. Élément en béton selon l'une quelconque des revendications 1 à 5, **caractérisé en ce que** le matériau moussé présente une densité de 200 à 400 kg/m³.

7. Élément en béton selon l'une quelconque des revendications 1 à 6, **caractérisé en ce que** le matériau moussé comprend une résine époxyde.

8. Élément en béton selon l'une quelconque des revendications 1 à 7, **caractérisé en ce que** le matériau moussé est constitué de 20 à 90 pour cent en volume d'air.

9. Élément en béton selon l'une quelconque des revendications 1 à 8, **caractérisé en ce qu'**il s'agit d'une construction de plafond, de mur ou de toit.

10. Procédé de fabrication d'un élément en béton selon l'une quelconque des revendications 1 à 9, **caractérisé en ce que** l'armement (2) et le matériau moussé absorbant le son (3) sont introduits sous la forme d'une masse fluide réactive dans une coque et la masse fluide réactive est au moins partiellement durcie.

11. Procédé de fabrication d'un élément en béton selon la revendication 10, **caractérisé en ce que** la masse fluide réactive comprend un liant alumosilicate activé par un alcali.

12. Procédé de fabrication d'un élément en béton selon la revendication 10 ou 11, **caractérisé en ce que** la masse fluide réactive comprend un tensioactif et est moussée par apport mécanique d'air.

13. Procédé de fabrication d'un élément en béton selon l'une quelconque des revendications 10 à 12, **caractérisé en ce que** la masse fluide réactive comprend au moins un composé d'époxyde émulsifiable à l'eau et/ou au moins une émulsion de résine époxyde auto-émulsifiable.

14. Procédé de fabrication d'un élément en béton selon l'une quelconque des revendications 10 à 13, **caractérisé en ce que** la masse fluide réactive comprend des fibres.

15. Utilisation d'un élément en béton selon l'une quelconque des revendications 1 à 9 en tant que couverture acoustique dans un bâtiment.
